(19) **Europäisches Patentamt / European Patent Office / Office européen des brevets**

(11) **EP 3 898 287 B1**

(12) **FASCICULE DE BREVET EUROPEEN**

(45) Date de publication et mention
de la délivrance du brevet:
**08.02.2023 Bulletin 2023/06**

(21) Numéro de dépôt: **19842824.5**

(22) Date de dépôt: **16.12.2019**

(51) Classification Internationale des Brevets (IPC):
**B60C 11/24** [(1985.01)]    **B60C 23/04** [(1968.09)]

(52) Classification Coopérative des Brevets (CPC):
**B60C 11/246; B60C 23/04**

(86) Numéro de dépôt international:
**PCT/FR2019/053093**

(87) Numéro de publication internationale:
**WO 2020/128279 (25.06.2020 Gazette 2020/26)**

(54) **PROCÉDÉ D'OBTENTION DE LA DEFORMATION D'UN PNEUMATIQUE SOUS CHARGE EN ROULAGE**

**VERFAHREN ZUR FESTSTELLUNG DER VERFORMUNG EINES UNTER BELASTUNG FAHRENDEN REIFENS**

**METHOD FOR OBTAINING THE DEFORMATION OF A TYRE UNDER LOAD WHEN RUNNING**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873901**
**30.01.2019 FR 1900871**

(43) Date de publication de la demande:
**27.10.2021 Bulletin 2021/43**

(73) Titulaire: **COMPAGNIE GENERALE DES ETABLISSEMENTS MICHELIN**
**63000 Clermont-Ferrand (FR)**

(72) Inventeur: **ALFF, Denis**
**63040 CLERMONT-FERRAND Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2006/034731      WO-A1-2018/029320**
**DE-A1-102011 000 556**

**Description**

**Domaine de l'invention**

La présente invention concerne les méthodes d'obtention de la déformation d'une enveloppe pneumatique d'un ensemble monté soumis à une charge en condition de roulage.

**Arrière-plan technologique**

Pour le domaine des dispositifs et des méthodes de mesure de la déformation de l'ensemble monté, ceux-ci servent principalement à caractériser le résultat de la déformation de l'enveloppe pneumatique due à la charge appliquée. Ainsi, les dispositifs et les méthodes cherchent à caractériser principalement l'empreinte au sol du pneumatique que l'on nomme aire de contact. En effet, la géométrie ou la répartition de contraintes au sein de cette aire de contact sont directement liées à la charge appliquée sur l'enveloppe pneumatique moyennant éventuellement la pression de gonflage de l'ensemble monté.

Cette aire de contact qui ne représente qu'un pourcentage minime de la périphérie de l'enveloppe pneumatique en condition monté gonflé est aussi très sensible à divers paramètres comme la macrorugosité du sol ou les irrégularités présentes sur le sol par exemple. En effet, la zone de contact réelle entre l'enveloppe pneumatique et le sol peut alors correspondre aux sommets des indenteurs caractérisant la macrorugosité du sol. Ainsi, la répartition des contraintes dans l'enveloppe pneumatique est modifiée pouvant influer sur les dimensions de l'aire de contact.

De plus, la détermination précise des dimensions de l'aire de contact est difficile à obtenir en condition de roulage. Classiquement en roulage, l'aire de contact se caractérise à l'aide de signaux représentatifs de la déformation de l'enveloppe pneumatique. Ceux-ci se manifestent par un saut important des grandeurs observées traduisant le passage de l'enveloppe pneumatique d'une forme toroïdale libre à une forme toroïdale partiellement écrasée à déplacement imposé. En effet, le sol constitue alors une condition aux limites de type déplacement imposé pour les points matériels de l'enveloppe pneumatique. Il est alors difficile d'identifier les points d'entrée ou de sortie exacts de l'aire de contact. De plus, l'aire de contact ne représente qu'une partie du développement de l'enveloppe pneumatique classiquement entre 1/20 et 1/10 du développement de la bande de roulement. Afin d'obtenir une image précise de cette portion du pneumatique, il faut disposer d'une discrétisation fine au niveau du signal de déformation. Ceci nécessite des espaces mémoires conséquents, des fréquences spatiales d'échantillonnage élevées au moins au niveau de l'aire de contact ce qui est consommateur en énergie.

On connait dans l'état de la technique, le document WO2017/32466A1 qui divulgue un dispositif de caractérisation de la charge appliquée à un ensemble monté sur la base d'un accéléromètre monté sur le pneumatique.

Les documents suivants peuvent être aussi cités :
WO 2006/034731 A1, DE 10 2011 000556 A1, WO 2018/029320 A1 divulguent tout trois des mesures d'accélérations radiales sur un pneumatique.

La présente invention porte sur un procédé qui permet une évaluation précise de la déformation de l'enveloppe pneumatique en condition de roulage quel que soit la nature de la chaussée tout en économisant l'énergie du dispositif de mesure. L'invention est définie par le jeu de revendications ci-jointes.

**Description de l'invention**

L'invention porte sur une méthode d'obtention de la déformation d'une enveloppe pneumatique soumise à une charge, dans un état gonflé et chargé tournant à une vitesse de rotation W. L'enveloppe pneumatique ayant un sommet, deux flancs et deux bourrelets de révolution autour d'un axe naturel de rotation et un plan médian, l'intersection du plan médian et de l'axe naturel de rotation définit un centre roue. La méthode comprend les étapes suivantes :

- Fixer au moins un capteur sur l'enveloppe pneumatique au droit du sommet ayant une position radiale R par rapport à l'axe naturel de rotation apte à générer au moins un signal de sortie proportionnel à l'accélération subie par le capteur dans l'enveloppe pneumatique ;

- Réaliser l'acquisition d'au moins un premier signal d'abscisse u comprenant au moins l'amplitude de l'accélération selon la direction normale au sommet lors d'un roulage à la vitesse de rotation W ;

- Déterminer une accélération de référence $\gamma^{reference}$ fonction de la vitesse de rotation W et de la position du au moins un capteur ;

- Identifier une première série d'incréments I, correspondant à l'abscisse u du au moins un premier signal où le premier signal franchit une valeur seuil B.

- Délimiter le premier signal entre un premier incrément $I_{min}$ et un second incrément $I_{max}$ afin de construire un signal tour de roue $Sig^{TdR}$;

- Définir au moins une première densité d'énergie S qui est fonction du signal tour de roue $Sig^{TdR}$, de l'accélération de référence $\gamma^{reference}$, nommée S+ lorsque le signal tour de roue est supérieur à un seuil A, ou nommée S- lorsque le signal tour de roue est inférieure ou égale audit seuil A ;

- Identifier la déformation de l'enveloppe pneumatique $Def_{\%}$ générée par la charge comme une fonction de l'accélération de référence $\gamma^{reference}$ et de la première densité d'énergie S.

Comme dans l'état de la technique, il faut obtenir l'accélération d'un point matériel du pneumatique. Ici, il est important que l'accélération corresponde à sa composante normale au sommet puisque c'est cette composante qui est l'information principale de la déformation de l'enveloppe pneumatique. De plus il est préférable que cela soit l'accélération absolue du point matériel et non pas seulement sa composante alternative autour de la composante continue comme dans certaines méthodes de l'état de l'art. Cependant, si l'accélération délivrée par le capteur ne comprend pas la composante continue, il faut ajouter artificiellement cette composante continue comme étant l'accélération centrifuge résultant d'une position radiale R et d'une vitesse de rotation W. Préférentiellement, la position radiale R du capteur est déterminée sur un état gonflé et non chargé de l'ensemble monté. Ensuite, il faut délimiter le signal d'accélération les instants où le premier signal franchit l'aire de contact au travers d'un seuil B. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. Ainsi, le premier signal passera nécessairement au niveau d'un seuil. En fait, le premier signal passera à deux reprises au niveau de ce seuil par tour de roue. Ces passages correspondent schématiquement à la zone d'entrée et de sortie de l'aire de contact. Le signal tour de roue $Sig^{TdR}$ ainsi construit ne correspond pas nécessairement à un nombre entier de tour de roue.

Puis, on définit la vitesse de rotation W comme étant la vitesse de rotation moyenne sur la durée du signal tour de roue si la variation de vitesse de rotation est faible sur le signal tour de roue, c'est-à-dire inférieure à 15% par rapport à la vitesse moyenne. Si l'enveloppe pneumatique est à vitesse constante, c'est préférable car on élimine de nombreuses sources d'erreurs potentielles. Ainsi, la méthode est opérationnelle que la vitesse de rotation W de l'enveloppe pneumatique soit constante ou variable. L'accélération de référence $\gamma^{reference}$ correspond alors à l'accélération centrifuge subie par le capteur.

Ensuite, la simple comparaison du niveau d'accélération absolue du signal tour de roue $Sig^{TdR}$ avec une accélération de référence $\gamma^{reference}$ liée à la position radiale du capteur et au niveau de vitesse de rotation W permet de générer une densité d'énergie S. L'amplitude du signal tour de roue par rapport à un seuil A qui peut, par exemple, simplement être l'accélération de référence $\gamma^{reference}$ génère potentiellement un doublet de densités d'énergie de déformation positive et négative (S+, S-) à partir du signal tour de roue. Ainsi, la méthode ne fait que définir une densité d'énergie de déformation de l'enveloppe pneumatique et la distribuer dans deux sous-ensembles selon sa position par rapport au seuil A. Ce sont des opérations simples à réaliser qui consomment peu de ressources. Bien entendu, pour être représentative, la méthode part de l'accélération absolue qui permet une comparaison aisée avec l'accélération de référence $\gamma^{reference}$ pour identifier le doublet de densités d'énergie.

Enfin, la méthode détermine la déformation de l'enveloppe pneumatique comme une fonction de la densité d'énergie S calculée qu'elle norme sur la durée du signal tour de roue $Sig^{TdR}$ qui subirait une accélération de référence $\gamma^{reference}$. Ainsi, la déformation $Def_{\%}$ représente une normalisation de l'énergie de déformation sur un tour de roue physique de l'enveloppe pneumatique. De ce fait, on identifie un invariant énergétique lié à la déformation de l'enveloppe pneumatique soumis à une charge en condition de roulage. Bien entendu, une partie d'un seul tour de roue est nécessaire à la méthode. Cependant de façon préférentielle, le nombre de tours de roue sera d'au moins 5, voire 10 afin de moyenner les résultats ce qui permettra de s'affranchir de phénomènes aléatoires sur le signal comme par exemple des obstacles sur la chaussée sur laquelle roule l'enveloppe pneumatique. Ainsi, la précision de la méthode s'en trouve améliorée en mode industriel.

Avantageusement, l'acquisition du premier signal est effectuée pour une vitesse de rotation W supérieure ou égale à une vitesse de rotation seuil $W_{seuil}$ définie par la formule suivante :

[Math 1]

$$W_{seuil} = \frac{12}{\sqrt{Dev}}$$

- Où Dev est le développement de l'enveloppe pneumatique.

Ainsi, si la vitesse de roulage W est au-delà de la valeur seuil, il est aisé de dissocier le signal tour de roue par rapport à la valeur seuil A et ce quels que soient les aléas dans le signal tour de roue Sig$^{TdR}$ comme, par exemple, une forte macrorugosité de la chaussée, des perturbations électromagnétiques dans la chaîne de mesure, des vibrations au niveau de l'enveloppe pneumatique. De plus, cela permet aussi d'identifier plus nettement le signal de la gravité dans le signal tour de roue.

Selon un mode de réalisation préférentiel, on identifie la première série d'incréments I par la combinaison des étapes suivantes :

- Définir une valeur seuil B qui est fonction du au moins un maximum d'au moins une partie du premier signal ;
- Déterminer un second signal d'abscisse u comme une fonction de la au moins une partie du premier signal et de la valeur seuil B ;
- Identifier la première série des incréments I, correspondant à l'abscisse u du au moins une partie du premier signal et du second signal où le second signal franchit un seuil E.

Dans ce mode de réalisation, on n'emploie que le premier signal pour identifier les incréments représentatif du passage du capteur dans l'aire de contact. En effet, le signal d'accélération selon la direction radiale d'une enveloppe pneumatique soumise à une charge va nécessairement tendre vers zéro lors de la traversée de l'aire de contact par le capteur si on néglige le signal de la gravité terrestre comme pour des vitesses de rotation élevées. La méthode propose de construire un second signal lié au premier signal et à un seuil B qui permettra d'effectuer des opérations mathématiques et logiques élémentaires.

Ainsi, le second signal passera nécessairement au niveau d'une valeur seuil B. En fait, le second signal passera à deux reprises au niveau de ce seuil par tour de roue. En prenant en compte le franchissement, on a un détecteur de passage dans l'aire de contact à partir du second signal du capteur. Du fait de la discrétisation spatiale grossière qui peut être employée, cette détection est suffisante pour la méthode d'évaluation de la déformation de l'enveloppe pneumatique.

Pour déterminer le seuil B, il est proposé d'effectuer une détection sur une partie amont du signal pour identifier une valeur MAX dont dépendra le seuil B. En effet, l'accélération radiale juste avant et après l'aire de contact, pour un signal nettoyé de la gravité terrestre, atteint une valeur maximale de façon continue qui est fonction des conditions de roulage de l'enveloppe pneumatique. Le seuil B sera alors fonction d'une valeur MAX qui s'approchera de cette valeur maximale selon la discrétisation du premier et second signal. Il n'est pas nécessaire d'être précis sur cette valeur MAX pour que la méthode converge.

Très préférentiellement, la valeur seuil B est une valeur compris entre 0,1 et 0.5 du au moins un maximum d'au moins une partie du premier signal.

Préférentiellement, le second signal étant obtenu par la différence entre le premier signal et la valeur seuil B, le seuil E est la valeur nulle ou le second signal étant obtenu par le rapport entre le premier signal et la valeur seuil B, le seuil E est la valeur unité.

Ce sont deux exemples simples de second signal permettant d'effectuer des opérations simples et élémentaires pour identifier les incréments du signal discrétisé représentatifs du passage du capteur dans l'aire de contact lors du roulage de l'enveloppe pneumatique.

Selon un autre mode de réalisation, l'identification des incréments I comprend les étapes suivantes ;

- Créer une seconde série d'incréments J correspondant à l'abscisse u médian entre les abscisses u des incréments I de parités identiques et consécutifs,
- Construire le signal tour de roue Sig$^{TdR}$ entre un premier incrément J$_{min}$ et un second incrément J$_{max}$.

C'est un processus complémentaire de l'identification des incréments I représentatifs du passage dans l'aire de contact. Cette fois, on crée une série d'incréments J situés entre les incréments I pairs ou impairs. En effet, la méthode d'identification des incréments I donne deux incréments par tour de roue traduisant l'entrée et la sortie de l'aire de contact. Lors du roulage à la vitesse de rotation W, le sens de rotation de l'enveloppe pneumatique n'est pas modifié. Par conséquent, la parité des incréments I donne directement une information tour de roue. L'objectif est ici de commencer le signal tour de roue Sig$^{\text{TdR}}$ à l'opposé de l'aire de contact. Ainsi, les erreurs de discrétisation spatiale de la méthode seront moins élevées puisque le signal de l'accélération radiale est sensiblement autour de l'accélération de référence à l'opposé de l'aire de contact. On a la possibilité de choisir soit les incréments I pairs ou impairs pour déterminer les incréments J qui serviront alors à délimiter le signal tour de roue Sig$^{\text{TdR}}$ qui sera construit sur un nombre entier de tours de roue.

Avantageusement, le seuil A est fonction de l'accélération de référence $\gamma^{\text{reference}}$.

Le seuil A permet de dissocier les densités d'énergie positif et négatif de la méthode.

En effet, tout signal de mesure est bruité. Il est possible de filtrer, ou lisser ce signal en temps réel, mais au risque de perdre de l'information, notamment la dynamique du passage dans l'aire de contact. Par définition, ce bruit est de valeur moyenne sensiblement nulle. Et si, en théorie, il ne doit pas ou peu affecter le calcul des densités d'énergie S$^+$ et S$^-$, il est susceptible de perturber la classification dans S$^+$ ou S$^-$, et donc fausser le résultat final. Ce seuil A a pour objectif de permettre de ranger les variations entre le signal de tour de roue et l'accélération de référence selon l'une ou l'autre des densités d'énergie. Ce seuil A permet de tenir compte des variations du signal de tour de roue dues à des perturbations et un mauvais rapport signal/bruit, ces perturbations pouvant provenir de la macrorugosité de la route, d'obstacles ponctuels rencontrés sur la route, des vibrations propres au pneumatique ou au véhicule sur lequel il est monté, ou des petits dysfonctionnements électromagnétiques de la chaîne de mesure inhérents à la nature et la qualité des composants électroniques utilisés. Comme le signal tour de roue et l'accélération de référence dépendent de la vitesse de rotation W de l'ensemble monté et de la position radiale du capteur, il semble opportun de rendre dépendant la valeur seuil A de l'accélération de référence pour s'affranchir de ces perturbations qui pourrait polluer la précision souhaitée.

Très avantageusement, le seuil A est fonction d'un facteur C selon la formule suivante :

[Math 1bis]

$$A = C * \gamma^{Reference}$$

Préférentiellement, le facteur C est supérieur ou égal à 0,5 et inférieur ou égal à 0,9.

Cette valeur du facteur C permet à la fois de dissocier la densité d'énergie positive et négative sur le signal tour de roue. En effet, lors du passage dans l'aire de contact, le signal tour de roue tend vers zéro. De plus, la transition au niveau de l'entrée et la sortie de l'aire de contact est très forte, très rapide et d'un profil toujours sensiblement identique. Ainsi, une valeur de 0,5 permet de ne pas trop diminuer le nombre de points de mesure qui seront affectés à la densité d'énergie négative S- ou augmenter ceux qui sont affectés à S+. En effet, l'objectif de la méthode est d'employer une discrétisation spatiale peu élevée. Généralement, peu de points de mesure sont situées au niveau de la zone de transition. De ce fait, l'erreur commise sur S- et sur S+ est minime voire nulle si aucun point de mesure ne se trouve dans la zone de sélection correspondante à C entre 0,5 et 0,9. Elle sera en outre répétitive si on utilise un coefficient C figé proportionnel à $\gamma^{\text{Reference}}$ pour toutes les caractérisations, et l'erreur éventuellement induite sera reproductible donc transparente par rapport à un niveau de référence défini par ailleurs.

A l'inverse, une valeur de C égale à un est la valeur théorique qui permet de dissocier les points entre les deux densités d'énergie possibles. Si cela est idéal sur des sols lisses avec des conditions optimales minimisant les perturbations sur la chaîne de mesure. La moindre perturbation peut impacter la précision requise sur le résultat.

Selon un premier mode de réalisation, l'accélération de référence $\gamma^{\text{reference}}$, fonction de la position radiale R du au moins un capteur, est définie par la formule suivante :

[Math 2]

$$\gamma^{reference} = R * W^2$$

Si les opérations mathématiques sont déportées, il est possible de définir l'accélération de référence $\gamma^{\text{reference}}$ comme l'accélération centrifuge subie par le capteur. De ce fait, il faut avoir accès à la position radiale R du capteur et à la vitesse de rotation W de l'enveloppe pneumatique.

La position radiale R du capteur peut être déterminée par une échelle de cote connaissant les dimensions de l'enveloppe pneumatique, les caractéristiques de la structure de l'enveloppe pneumatique et les caractéristiques de l'organe électronique accueillant le capteur. De plus, la position radiale R correspond à un état gonflé à la pression de gonflage et non chargé de l'ensemble monté.

La vitesse de rotation W peut aussi être estimée à l'aide d'un autre signal comme un top tour par exemple ou le nombre de points d'acquisition entre 2 fronts de même nature (ou 2 Incréments successifs I de parité identiques), connaissant la fréquence d'acquisition. La connaissance du développement de l'enveloppe pneumatique et du temps écoulé entre deux tops tours donnent une première évaluation de la vitesse de rotation W par tour de roue.

C'est une première évaluation de l'accélération de référence $\gamma^{reference}$.

Selon un second mode de réalisation, la détermination de l'accélération de référence $\gamma^{reference}$ est définie comme la valeur moyenne de au moins une partie du premier signal compris entre deux incréments de parité identique appartenant à la même série d'incrément.

Dans ce cas, si les opérations sont faites en enregistrement la totalité du premier signal sur au moins un tour, il est possible de remonter à l'information de l'accélération de référence. De plus, si on a calculé les incréments J selon le mode de réalisation associée, on a naturellement identifié un tour de roue. Dans le cas d'une identification à l'aide des incréments J, les erreurs de discrétisation seront potentiellement plus importantes en raison de la soudaineté des événements liés à l'entrée et la sortie de l'aire de contact.

Préférentiellement, ayant phasé le signal tour de roue $Sig^{TdR}$ par rapport à une position angulaire de l'enveloppe pneumatique, une correction Corr est apportée au signal tour de roue $Sig^{TdR}$ pour prendre en compte l'effet de la gravité terrestre.

La correction de la gravité terrestre permet de minimiser l'erreur sur la déformation de l'enveloppe pneumatique en particulier pour les vitesses de roulage W basses. En effet, le capteur, lors du roulage de l'enveloppe pneumatique, fait une révolution autour de l'axe naturel de rotation. Le signal de sortie du capteur étant proportionnel à l'accélération radiale sera pollué par la gravité terrestre. Sur un tour de roue, la gravité terrestre va générer un signal sinusoïdal d'amplitude g qui est fonction de l'altitude du capteur dans le repère de la Terre. Il faut donc retirer ce signal parasite Corr du signal tour de roue $Sig^{TdR}$ ce qui nécessite un recalage du signal tour de roue par rapport à une position angulaire de l'enveloppe pneumatique.

Bien entendu, plus la vitesse de rotation W de l'enveloppe pneumatique est élevée, plus l'accélération centrifuge subie par le capteur devient prédominant par rapport à ce signal parasite.

Selon un mode de réalisation préférentiel, la méthode comprenant les étapes suivantes :

- Déterminer un premier nombre de passage $N^{Pas}$ du signal tour de roue $Sig^{TdR}$ comme la partie entière par excès de la moitié de la différence entre le second incrément ($J_{max}$, $I_{max}$) et le premier incrément ($I_{min}$, $J_{min}$) du signal tour de roue $Sig^{TdR}$ ;
- Déterminer un second nombre de passage $N'^{Pas}$ du signal tour de roue $Sig^{TdR}$ comme la partie entière de la moitié de la différence entre le second incrément ($J_{max}$, $I_{max}$) et le premier incrément ($I_{min}$, $J_{min}$) du signal tour de roue $Sig^{TdR}$ ;
- Si le premier incrément ($I_{min}$) est un incrément correspondant à l'abscisse u du premier signal où le premier signal franchit la valeur seuil B en descente, alors la méthode comprend l'étape suivante :

  - Identifier la déformation de l'enveloppe pneumatique $Def_\%$ soumise à une charge par les formules suivantes :

- [Math 3a]

$$Def_\% = \frac{(S^-)}{(N^{Pas} \times \gamma^{Reference})} = \frac{(S^+)}{(N'^{Pas} \times \gamma^{Reference})} = \frac{1}{2} * \left[ \left( \frac{(S^+)}{(N^{Pas} \times \gamma^{Reference})} \right) + \left( \frac{(S^-)}{(N'^{Pas} \times \gamma^{Reference})} \right) \right]$$

- Sinon, la méthode comprend l'étape suivante :

  - Identifier la déformation de l'enveloppe pneumatique Def% soumise à une charge par les formules suivantes :

- [Math 3b]

$$Def_\% = \frac{(S^+)}{(N^{Pas} \times \gamma^{Reference})} = \frac{(S^-)}{(N'^{Pas} \times \gamma^{Reference})} = \frac{1}{2} * \left[ \left( \frac{(S^+)}{(N^{Pas} \times \gamma^{Reference})} \right) + \left( \frac{(S^-)}{(N'^{Pas} \times \gamma^{Reference})} \right) \right]$$

Ici, la détermination de la déformation de l'enveloppe pneumatique $Def_\%$ nécessite tout d'abord d'identifier le nombre de passage dans l'aire de contact du capteur dans le signal tour de roue $Sig^{TdR}$. Comme le signal tour de roue $Sig^{TdR}$ n'est pas forcément délimité sur un nombre entier de tours de roue, on déterminer à la fois $N^{pas}$ et $N'^{pas}$. En particulier, il n'est pas nécessaire que le traitement soit fait sur un signal excédant un tour de roue, un signal comprenant au moins une partie du tour de roue comprenant le passage dans l'aire de contact ou son complémentaire suffit.

Ensuite, il faut déterminer si le premier incrément I du signal tour de roue est sur une entrée ou une sortie de l'aire de contact. Cela s'effectue en comparant la valeur du premier incrément situé après le premier incrément I du signal tour de roue $Sig^{TdR}$ en le comparant avec la valeur seuil B.

Enfin, la déformation de l'enveloppe pneumatique Def% peut être déterminée soit uniquement à partir de la densité d'énergie négative, soit de la densité d'énergie positive soit deux densités.

Selon un mode de réalisation spécifique, l'acquisition du premier signal est effectuée à une fréquence d'échantillonnage constante et la discrétisation spatiale d'échantillonnage du premier signal est de moins de 6 degrés, préférentiellement moins de 3 degrés, très préférentiellement moins de 1 degré

Par exemple si on souhaite que l'évaluation de la déformation de l'enveloppe pneumatique ait lieu au niveau de l'ensemble monté, il faut que le capteur soit associé à un organe électronique comprenant un microcontrôleur, un espace mémoire, une batterie et une horloge. Alors, la discrétion spatiale envisagée avec une fréquence d'échantillonnage constante permet de réaliser des opérations élémentaires au niveau du microcontrôleur en minimisant la consommation de la batterie. De plus, la discrétisation minimale de l'ordre de 60 points au tour de roue permet de limiter le nombre d'opérations et de transfert vers l'espace mémoire. Pour autant, la précision obtenue sur la déformation de l'enveloppe pneumatique est bonne tout en ayant économisé la batterie de l'organe électronique. Cela permet de ne stocker ou de ne transférer que des valeurs scalaires intermédiaires de la méthode.

Avantageusement, les densités d'énergie négative $S^-$ et positive $S^+$ sont définies selon les formules suivantes :

- Si le premier incrément ($I_{min}$) est un incrément correspondant à l'abscisse u du premier signal où le premier signal franchit la valeur plancher E en descente, alors:

  - [Math 4a]

$$S^+ = \left| \sum_{Sig^{TdR} > A} (Sig^{TdR} - \gamma^{Reference}) \right| * \frac{N^{iPas}}{N^V} \text{ ;et}$$

  - [Math 4b]

$$S^- = \left| \sum_{Sig^{TdR} \leq A} (Sig^{TdR} - \gamma^{Reference}) \right| * \frac{N^{iPas}}{N^V} \text{ ;}$$

- Sinon :

  - [Math 4c]

$$S^+ = \left| \sum_{Sig^{TdR} > A} (Sig^{TdR} - \gamma^{Reference}) \right| * \frac{N^{iPas}}{N^V} \text{ ;et}$$

  - [Math 4d]

$$S^- = \left| \sum_{Sig^{TdR} \leq A} (Sig^{TdR} - \gamma^{Reference}) \right| * \frac{N^{iPas}}{N^V} \text{ ;}$$

- Où $N^V$ est le nombre total de points discrétisés sur le signal tour de roue $Sig^{TdR}$.

C'est une façon simple d'obtenir une valeur scalaire de chaque densité d'énergie à partir du signal discrétisé du signal tour de roue.

Avantageusement, la détermination de l'accélération de référence $\gamma^{reference}$ est obtenue par la formule suivante :

[Math 5 ]

$$\gamma^{reference} = \frac{\left( \sum_{Sig^{TdR}} Sig^{TdR} \right)}{N^V}$$

- Où $N^V$ est le nombre total de points discrétisés sur le signal tour de roue $Sig^{TdR}$.

Dans le cas où l'évaluation de l'accélération de référence $\gamma^{Reference}$ est évaluée comme la valeur moyenne du signal tour de roue sur un nombre fini de tour de roue, c'est une façon simple et rapide d'obtenir une évaluation de la grandeur scalaire.

Très avantageusement, la déformation de l'enveloppe pneumatique soumise à une charge est déterminée par la formule suivante :

[Math 6]

$$Def_\% = \frac{\left[\sum_{Signal^{TdR} > \lambda \; ou \; Signal^{TdR} \le \lambda} (Sig^{TdR} - \gamma^{Reference})\right]}{\left(\sum_{Sig^{TdR}} Sig^{TdR}\right)}$$

En outre, en optant pour une évaluation de l'accélération de référence $\gamma^{reference}$ sou la forme de la valeur moyenne du signal tour de roue on fait apparaitre avantageusement au numérateur et au dénominateur de la formule de calcul de $Def_\%$ une mesure réalisée par le même capteur, ce qui signifie que le résultat sera insensible à toute dérive des caractéristiques de ce capteur induite par les éléments extérieurs.

C'est la forme la plus simple et la plus élémentaire pour identifier la déformation de l'enveloppe pneumatique à partir des grandeurs discrétisés du signal tour de tour. Les deux formules sont théoriquement équivalentes aux erreurs générées par la discrétisation du signal tour de roue.

Une troisième formule est possible faisant intervenir, les nombres de passages dans l'aire de contact au travers de la demi somme des densités d'énergie positive $S^+$ et négative $S^-$ divisée par l'accélération de référence $\gamma^{reference}$ sous leurs formes discrétisées.

## Description brève des dessins

L'invention sera mieux comprise à la lecture de la description qui va suivre dans le cas d'une application à des bandages pneumatiques. Cette application est donnée uniquement à titre d'exemple et faite en se référant aux bs annexées dans lesquelles :

- La Fig 1 est l'exemple d'un premier signal de la méthode.

- La Fig 2 représente le signal tour de roue $Sig^{TDR}$ et son identification avec un premier mode de réalisation.

- La Fig 3 représente le signal tour de roue $Sig^{TdR}$ et son identification avec un autre mode de réalisation.

- La Fig 4 représente le signal tour de roue $Sig^{TdR}$ lors d'un roulage à vitesse de rotation W variable.

- La Fig 5 représente le signal tour de roue $Sig^{TdR}$ lors d'un roulage à vitesse de rotation W constante sur un tour.

## Description détaillée de modes de réalisation

Pour la mise en oeuvre de l'invention, il faut équiper une enveloppe pneumatique d'un organe électronique comprenant un capteur, un microcontrôleur, une horloge, un espace mémoire et un moyen de stockage d'énergie, et des moyens de communications Radio Fréquence en émission et éventuellement en réception. L'enveloppe pneumatique comprend un sommet, deux flancs et deux bourrelets de révolution autour d'un axe naturel de rotation. L'enveloppe comprend aussi un plan médian équidistant des deux bourrelets, l'intersection du plan médian et de l'axe naturel de rotation définissant un centre roue.

Le capteur est fixé sur l'enveloppe pneumatique au droit du sommet, au droit d'un rib ou d'un sillon longitudinal qui sont des zones de rigidité homogène, à une position radiale R fixe par rapport à l'axe naturel de rotation. Le capteur est apte à générer au moins un signal de sortie proportionnel à l'accélération normale au sommet subie par le capteur dans l'enveloppe pneumatique. En fait, ce capteur peut être monoaxe, auquel cas, il faut le positionner de façon radiale. Il peut aussi être aussi constitué d'une pluralité de capteurs monoaxes. Dans ce cas, il convient de bien identifier l'orientation de chacun des capteurs monoaxes par rapport au repère de l'enveloppe pneumatique afin de reconstruire l'accélération normale au sommet de l'enveloppe pneumatique. Idéalement, le capteur prend en compte la composante continue et la composante alternative de l'accélération. Dans le cas où seule la composante alternative est mesurée par le capteur, il conviendra pour la mise en oeuvre de la méthode de construire artificiellement la composante continue. Pour cela, il faut alors identifier la vitesse de rotation W de l'enveloppe pneumatique en temps réel et connaître avec précision la position radiale R du capteur. En effet, la composante continue sera évaluée comme l'accélération centrifuge du capteur par rapport à l'axe naturel de rotation de l'enveloppe pneumatique. Le capteur dans le cas de la prise en compte de la composante continue peut être un accéléromètre de technologie piezorésistive ou capacitive.

L'organe électronique est alimenté par le moyen de stockage d'énergie, est piloté par le microcontrôleur à l'aide l'horloge et dans lequel sont aussi implantés les algorithmes de calcul qui permettent de déterminer par exemple l'état de déformation du pneumatique en utilisant les signaux issus de l'élément capteur. Les moyens de communication RF d'émission servent à transmettre les informations calculées, et ceux de réception de recevoir des instructions de fonctionnement ou des informations utiles dans les algorithmes de calcul. Idéalement, cet organe électronique comprends ou est associé d'autres éléments de mesures (tels que pression, température, niveau d'usure, distance parcourue, etc...) afin de mutualiser les organes et optimiser les coûts de mise en oeuvre.

Ici, le capteur est mis en route par l'intermédiaire du microcontrôleur lorsque l'enveloppe pneumatique est en condition de roulage. Bien entendu, on peut sélectionner une valeur seuil de vitesse de rotation W à partir de laquelle l'acquisition d'un signal en sortie du capteur est effectuée. L'organe électronique dispose d'un espace mémoire adaptée au type d'analyse que l'on souhaite effectuer. En fait la capacité de cet espace mémoire est prédéfinie selon l'usage de l'organe électronique. C'est le microcontrôleur qui pilote le rangement des valeurs du capteur vers l'espace mémoire. De plus, le microcontrôleur est apte à effectuer des opérations mathématiques et logiques élémentaires sur un nombre de données réduites. Si, les opérations mathématiques et logiques sont plus complexes ou que le nombre de données à manipuler devient conséquent, le microcontrôleur est remplacé par un microprocesseur. Enfin l'organe électronique est alimenté en énergie par un moyen de stockage. Le plus simple comme moyen de stockage est l'utilisation d'une batterie. Cependant, une capacité de grande dimension rechargeable à l'aide d'un élément piezo électrique pourrait être envisagée

La gamme de fréquence de l'organe électronique permet de couvrir une large bande de vitesse de rotation W avec une discrétisation spatiale de moins 6 degrés. Selon un mode de réalisation particulier, la fréquence d'échantillonnage est adaptative sur commande ou en réponse à un signal comme par exemple la vitesse de rotation W de l'enveloppe pneumatique.

De façon optionnelle, l'organe électronique contient ou et apte à obtenir l'identification de l'enveloppe pneumatique. Cette information est utile pour choisir un set de données utiles pour les algorithmes de calculs au niveau de l'organe électronique. Si, l'organe électronique doit obtenir l'identification du pneumatique ou recevoir des commandes pour effectuer une mesure, l'organe électronique est équipé d'un moyen de réception radiofréquence. Celui-ci fonctionne dans la gamme des basses fréquences, idéalement à la fréquence de 125KHz afin de s'affranchir des perturbations générées par les zones métalliques de l'enveloppe pneumatique et de son environnement proche dans le véhicule.

Selon un mode de réalisation spécifique, l'organe électronique dispose de moyens d'émission radiofréquence, spécifiquement dans la bande UHF (acronyme d'Ultra Hautes fréquences), en particulier aux alentours de 433MHZ ou 900MHz ou la bande dite BLE (acronyme en anglais de Bluetooth Low Emission) qui constituent des bandes de fréquences libres. De plus, la bande des UHF permet d'avoir des tailles d'antenne réduites facilitant l'intégration de l'organe électronique au sein de l'enveloppe pneumatique.

Cette communication en émission est utile pour transmettre les données de la méthode vers le véhicule ou l'extérieur du véhicule. Il est possible soit d'émettre le train de données correspondant à l'acquisition du signal tour de roue ou de transmettre des résultats intermédiaires qui auront été calculés au niveau de l'organe électronique. Ce second mode d'émission est nécessairement moins coûteux en énergie pour l'organe électronique puisque le flux de données est moins conséquent. Or, l'émission radiofréquence est un poste consommateur en énergie par rapport à des opérations mathématiques et logiques.

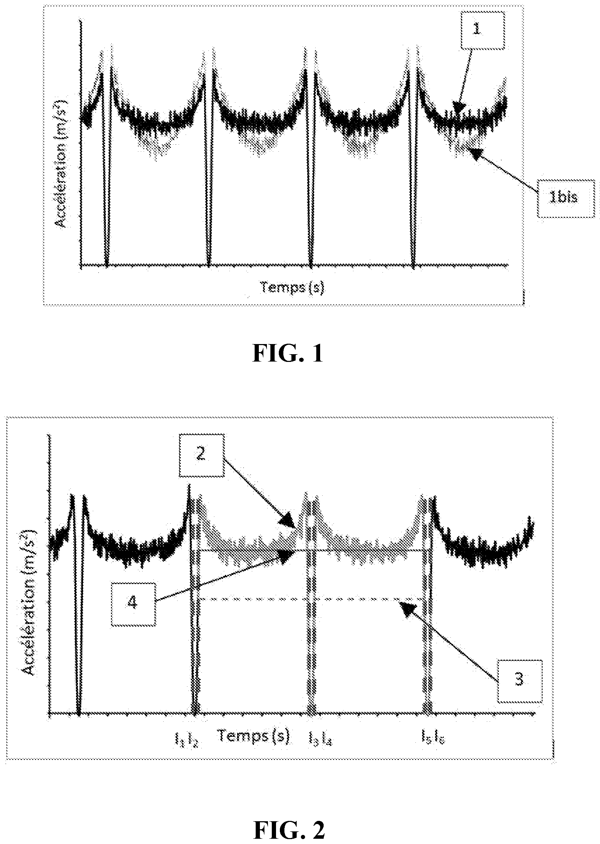

La Fig 1 présente un premier signal 1bis brut en gris correspondant à l'accélération normale au sommet d'une enveloppe pneumatique de type poids lourd roulant à une vitesse de rotation W constante. Régulièrement, de façon périodique, la courbe 1bis passe par une valeur quasi nulle. Ce phénomène périodique correspond à la traversée de l'aire de contact de l'enveloppe pneumatique par le capteur. La transition entre le passage du capteur entre l'aire de contact du pneumatique et l'autre partie de l'enveloppe pneumatique s'effectue brutalement au travers de fronts descendants ou montants selon que l'on soit à l'entrée ou la sortie de l'aire de contact. De plus, on note que le premier signal 1bis à une échelle de l'ordre du tour de roue suit une porteuse, le premier signal 1bis oscille à une fréquence plus élevée que la fréquence du tour de roue autour de cette porteuse. Ces oscillations correspondent aux bruits du premier signal 1bis du capteur dus aux divers aléas dont la macrorugosité de la route.

La courbe indexée 1 en noir, représente le même signal accélérométrique corrigé seulement de la gravité terrestre que l'on nommera premier signal corrigé 1. La correction est ici sinusoïdale en ayant phasé la correction sur un point situé au centre de l'aire de contact, c'est-à-dire à égal distance des deux fronts délimitant la partie du signal dont la valeur est quasi nulle. On observe que le premier signal 1 est plus plat entre les zones caractérisant l'aire de contact. Il est préférable d'effectuer les diverses étapes de la méthode sur ce premier signal corrigé 1.

La Fig 2 présente la méthode de détection du signal tour de roue 2 par la première méthode. A partir du premier signal 1, ici corrigé pour mieux expliciter l'exemple, on détermine un seuil B, illustré par la ligne pointillée 2. On identifie une série d'incréments I lorsque que le premier signal 1 franchit la ligne pointillée 2 ce qui correspond physiquement à une entrée ou une sortie de l'aire de contact par le capteur lié solidairement en rotation à l'enveloppe pneumatique. On délimite alors le premier signal tour de roue 2 entre un premier incrément, ici $I_1$, et un second incrément, ici $I_6$. Le signal tour de roue représente ici le signal accélérométrique du capteur sur un peu plus de deux tours de roue complets. On comptabilise trois passages dans l'aire de contact, $N^{pas}$, et deux passage en dehors de l'aire de contact, $N'^{pas}$. Par conséquent, il faudra évaluer les densités d'énergie positive $S^+$ à l'aide de $N'^{pas}$ et la densité d'énergie $S^-$ avec $N^{pas}$.

La valeur seuil B représentée par la ligne pointillée 3 a été évaluée dans notre cas sur une partie du premier signal 1 avec une fréquence d'échantillonnage variable. On extrait sur cette partie du premier signal 1, la valeur maximale discrétisée obtenue que l'on nomme MAX. La valeur seuil B est alors une valeur comprise entre 10 et 50% de la valeur MAX, dans notre cas, cette valeur est d'environ 50%.

On calcule comme la valeur moyenne du signal tour de roue 2, l'accélération de référence $\gamma^{reference}$ qui est représentée par la ligne continue 4 en noir en limitant la sommation entre des incréments de parité identiques afin d'voir un nombre fini de tours de roue Dans notre cas,, il a été choisi de prendre les incréments I impairs entre $I_1$ et $I_5$ afin d'identifier l'accélération de référence $\gamma^{reference}$ sur la majeure partie du signal tour de roue 2. Il est tout aussi possible de calculer l'accélération de référence sur la partie du signal tour de roue délimité par les incréments $I_2$ et $I_6$ qui donnerait un résultat identique aux erreurs de discrétisation près. Son évaluation est faite en temps réel, en cumulant les valeurs des incréments u du premier signal tour de roue que l'on, divise à la fin du signal tour de roue par le nombre d'incréments du premier signal tour de roue. Bien entendu on limite le signal tour de roue à une partie du signal tour de roue entre les incréments I de parité similaire.

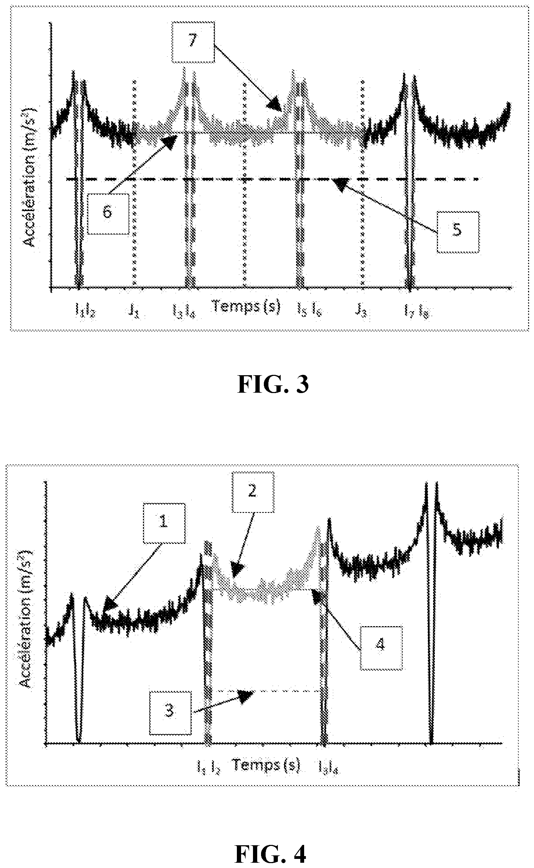

La Fig 3 est une illustration de la délimitation du signal tour de roue 7 en gris à partir du premier signal. Ici, c'est le second mode de réalisation de cette délimitation qui est employé.

A partir du premier signal, ici corrigé pour mieux expliciter l'exemple, on détermine un seuil B, illustré par la ligne pointillée 5. On identifie une série d'incréments I lorsque que le premier signal franchit la ligne pointillée 5 ce qui correspond physiquement à une entrée ou une sortie de l'aire de contact par le capteur lié solidairement en rotation à l'enveloppe pneumatique. Ensuite, en prenant dans cette illustration que les incréments I impairs, on construit une série d'incréments J situés de façon équidistante des incréments I impairs. Ces incréments sont repérés par les traits de points verticaux sur la Fig 3.

On délimite alors le signal tour de roue 7 entre un premier incrément, ici Ji, et un second incrément, ici J3. Le signal tour de roue 7représente ici le signal accélérométrique du capteur sur deux tours de roue complets. On comptabilise deux passages dans l'aire de contact, $N^{pas}$, et deux passages en dehors de l'aire de contact, $N'^{pas}$. Par conséquent, il faudra évaluer les densités d'énergie positive $S^+$ à l'aide de $N'^{pas}$ et la densité d'énergie $S^-$ avec $N^{pas}$.

La valeur seuil B représentée par la ligne pointillée 5 a été évaluée dans notre cas sur une partie du premier signal avec une fréquence d'échantillonnage variable. On extrait sur cette partie du premier signal 1, la valeur maximale discrétisée obtenue que l'on nomme MAX. La valeur seuil B est alors une valeur comprise entre 10 et 50% de la valeur MAX, dans notre cas, cette valeur est d'environ 50%.

On calcule comme la valeur moyenne du premier signal tour de roue 7, l'accélération de référence $\gamma^{reference}$ qui est représentée par la ligne continue 6 en noir Son évaluation est faite en temps réel, en cumulant les valeurs des incréments u du signal tour de roue entre les incréments J1 et J3 que l'on, divise à la fin du signal tour de roue par le nombre d'incréments u du signal tour de roue 7

Ce second mode de réalisation est la meilleure méthode puisque les erreurs de discrétisation du signal tour de roue sur les bords n'entrainent qu'une faible variation du calcul de la densité d'énergie positive $S^+$.

La Fig 4 présente un premier signal 1, préalablement corrigé de la gravité terrestre correspondant à l'accélération normale au sommet d'une enveloppe pneumatique de type poids lourd roulant à une vitesse de rotation W variable.

Ici, on détermine un seuil B, représenté par la ligne pointillée 3 pour le signal tour de roue 2 en gris clair.

Le seuil B permet d'identifier les incréments I correspondant physiquement à l'entrée ou la sortie de l'aire de contact par le capteur. Dans cette analyse, le signal tour de roue est limité à un peu prés un seul tour de roue ce qui est préférentiel pour limiter les erreurs liées à la variation de la vitesse de rotation W de l'enveloppe pneumatique. Le seuil B a été choisi afin qu'il corresponde à moins de la moitié d'une valeur MAX d'une partie du premier signal 1 situé avant le signal tour de roue 2. Cela permet de délimiter le signal tour de roue 2 entre un premier incrément, ici $1_1$, et un second incrément, ici $I_3$. Ainsi, le signal tour de roue 2 correspond dans ce cas particulier à un nombre entier de tour de roue de l'enveloppe pneumatique

On calcule alors, sur ce signal tour de roue 2, l'accélération de référence $\gamma^{reference}$ comme la valeur moyenne de ce signal tour de roue 2, illustré par la courbe continue 4.

On notera aussi que du fait de la vitesse de rotation W variable ici en phase d'accélération, le nombre d'incréments d'un tour de roue, délimité par des incréments I de parité identique par exemple, diminuent sensiblement.

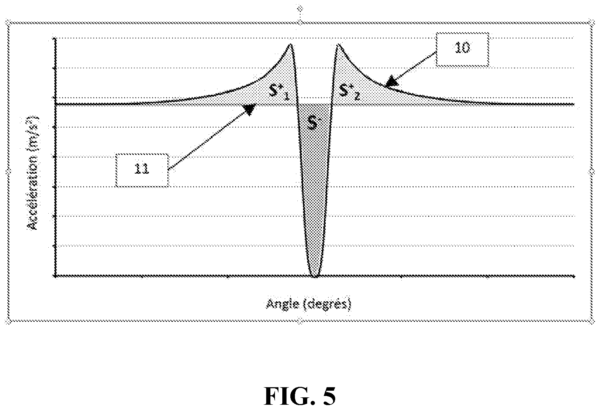

La Fig 5 est une illustration pour expliciter le calcul des densités d'énergie positive $S^+$ et négative $S^-$ sur un second signal tour de roue 10 correspond à un seul tour de roue lorsque la vitesse de rotation W est constante. Bien entendu, la méthode est identique si la vitesse de rotation W est variable ou que le signal tour de roue est délimité sur plusieurs tour de roue.

On détermine le seuil A comme étant ici le produit d'une valeur C, ici égale à 1,0, par l'accélération de référence $\gamma^{reference}$ identifié sur une partie du signal tour de roue. Ce seuil est matérialisé par la ligne continue 11. En fait, il est préférable sur des signaux réels de prendre une valeur de C égal à 0,7. Si les signaux sont fortement perturbés, oscillations sensibles autour du signal tour de roue 10 à une fréquence plus élevée que le tour de roue, on peut choisir une valeur de C égal à 0,5 ou 0,6. En revanche, pour des signaux obtenus sur des chaussées globalement lisses, une valeur de C de l'ordre de 0,8 ou 0,9 peut être employée. Il faut que cette valeur C soit figée pour toutes les étapes de la méthode.

On calcule les densités d'énergie positive $S^+$ ou négative $S^-$ comme la sommation des valeurs absolues des différences entre le second signal tour de roue 10 et l'accélération de référence $\gamma^{reference}$, représentée par la courbe continue 11. Nécessairement, la surface délimitée par les surfaces $S^+$ est égale à la surface délimitée par la surface $S^-$ aux erreurs de discrétisation prés.

## Revendications

1.  Méthode d'obtention de la déformation d'une enveloppe pneumatique soumise à une charge, dans un état gonflé et chargé tournant à une vitesse de rotation W, la dite enveloppe pneumatique ayant un sommet, deux flancs et deux bourrelets de révolution autour d'un axe naturel de rotation et un plan médian, l'intersection du plan médian et de l'axe naturel de rotation définissant un centre roue, comportant les étapes suivantes :

    - Fixer au moins un capteur sur l'enveloppe pneumatique au droit du sommet ayant une position radiale R par rapport à l'axe naturel de rotation apte à générer au moins un signal de sortie proportionnel à l'accélération subie par ledit capteur dans l'enveloppe pneumatique ;
    - Réaliser l'acquisition d'au moins un premier signal d'abscisse u-comprenant au moins l'amplitude de l'accélération selon la direction normale au sommet lors d'un roulage à la vitesse de rotation W ;
    - Déterminer une accélération de référence $\gamma^{reference}$ fonction de la vitesse de rotation W et de la position du au moins un capteur ;
    - Identifier une première série d'incréments I, correspondant à l'abscisse u du au moins un premier signal où le premier signal franchit une valeur seuil B.
    - Délimiter le premier signal entre un premier incrément $I_{min}$ et un second incrément $I_{max}$ afin de construire un signal tour de roue $Sig^{TdR}$;
    - Définir au moins une première densité d'énergie S qui est fonction du signal tour de roue, de l'accélération de référence $\gamma^{reference}$, nommée $S^+$ lorsque le signal tour de roue est supérieur à un seuil A, ou nommée $S^-$ lorsque le signal tour de roue est inférieure ou égale audit seuil A ;
    - Identifier la déformation de l'enveloppe pneumatique $Def_\%$ générée par la charge comme une fonction de l'accélération de référence $\gamma^{reference}$ et de la première densité d'énergie S.

2.  Méthode d'obtention de la déformation d'une enveloppe pneumatique selon la revendications 1 dans laquelle, l'acquisition du premier signal est effectuée pour une vitesse de rotation W supérieure ou égale à une vitesse de rotation seuil $W_{seuil}$ définie par la formule suivante :

[Math 1]

$$W_{seuil} \approx \frac{12}{\sqrt{Dev}}$$

Où Dev est le développement de l'enveloppe pneumatique.

3.  Méthode d'obtention énergétique de la déformation d'une enveloppe pneumatique selon l'une quelconques des revendications 1 à 2 dans laquelle on identifie la première série d'incréments I par la combinaison des étapes suivantes :

    - Définir une valeur seuil B qui est fonction du au moins un maximum d'au moins une partie du premier signal ;
    - Déterminer un second signal d'abscisse u comme une fonction de la au moins une partie du premier signal et de la valeur seuil B ;
    - Identifier la première série des incréments I, correspondant à l'abscisse u du au moins une partie du premier signal et du second signal où le second signal franchit un seuil E.

4. Méthode d'obtention énergétique de la déformation d'une enveloppe pneumatique selon la revendication précédente dans laquelle la valeur seuil B est une valeur compris entre 0,1 et 0,5 du au moins un maximum d'au moins une partie du premier signal.

5. Méthode d'obtention énergétique de la déformation d'une enveloppe pneumatique selon l'une quelconque des revendications 3 à 4 dans laquelle, le second signal étant obtenu par la différence entre le premier signal et la valeur seuil B, le seuil E est la valeur nulle ou le second signal étant obtenu par le rapport entre le premier signal et la valeur seuil B, le seuil E est la valeur unité.

6. Méthode d'obtention énergétique de la déformation d'une enveloppe pneumatique selon l'une quelconque des revendications 1 à 5 dans laquelle, l'identification des incréments comprend les étapes suivantes ;

   - Créer une seconde série d'incréments J correspondant à l'abscisse u médian entre les abscisses u des incréments I de parités identiques et consécutifs,
   - Construire le signal tour de roue $Sig^{TdR}$ entre un premier incrément $J_{min}$ et un second incrément $J_{max}$.

7. Méthode d'obtention énergétique de la déformation d'une enveloppe pneumatique selon l'une des revendications précédentes dans laquelle le seuil A est fonction de l'accélération de référence $\gamma^{reference}$.

8. Méthode d'obtention énergétique de la déformation d'une enveloppe pneumatique selon l'une des revendications 1 à 7 dans laquelle l'accélération de référence $\gamma^{reference}$, fonction de la position radiale R du au moins un capteur, est définie par la formule suivante :

[Math 2]

$$\gamma^{reference} = R * W^2$$

9. Méthode d'obtention énergétique de la déformation d'une enveloppe pneumatique selon l'une des revendications 1 à 7 dans laquelle la détermination de l'accélération de référence $\gamma^{reference}$ est définie comme la valeur moyenne de au moins une partie du premier signal compris entre deux incréments de parité identique appartenant à la même série d'incrément.

10. Méthode d'obtention de la déformation d'une enveloppe pneumatique selon l'une des revendications précédentes dans laquelle, ayant phasé le signal tour de roue $Sig^{TdR}$ par rapport à une position angulaire de l'enveloppe pneumatique, une correction Corr est apportée au signal tour de roue $Sig^{TdR}$ pour prendre en compte l'effet de la gravité terrestre.

11. Méthode d'obtention énergétique de la déformation d'une enveloppe pneumatique selon l'une quelconque des revendications 1 à 10, la méthode comprenant les étapes suivantes :

   - Déterminer un premier nombre de passage $N^{Pas}$ du signal tour de roue $Sig^{TdR}$ comme la partie entière par excès de la moitié de la différence entre le second incrément ($J_{max}$, $I_{max}$) et le premier incrément ($I_{min}$, $J_{min}$) du signal tour de roue $Sig^{TdR}$ ;
   - Déterminer un second nombre de passage $N'^{Pas}$ du signal tour de roue $Sig^{TdR}$ comme la partie entière de la moitié de la différence entre le second incrément ($J_{max}$, $I_{max}$) et le premier incrément ($I_{min}$, $J_{min}$) du signal tour de roue $Sig^{TdR}$ ;
   Si le premier incrément ($I_{min}$) est un incrément correspondant à l'abscisse u du premier signal où le premier signal franchit la valeur seuil B en descente, alors la méthode comprend l'étape suivante :

   - Identifier la déformation de l'enveloppe pneumatique $Def_\%$ soumise à une charge par les formules suivantes :

[Math 3a]

$$Def_\% = \frac{(S^-)}{(N^{Pas} * \gamma^{Reference})} = \frac{(S^+)}{(N'^{Pas} * \gamma^{Reference})} = \frac{1}{2} * \left[ \left( \frac{(S^+)}{(N'^{Pas} * \gamma^{Reference})} \right) + \left( \frac{(S^-)}{(N^{Pas} * \gamma^{Reference})} \right) \right]$$

Sinon, la méthode comprend l'étape suivante :

- Identifier la déformation de l'enveloppe pneumatique Def$_\%$ soumise à une charge par les formules suivantes :

[Math 3b]

$$Def_\% = \frac{(S^+)}{(N^{Pas} * \gamma^{Reference})} = \frac{(S^-)}{(N'^{Pas} * \gamma^{Reference})} = \frac{1}{2} * \left[ \left( \frac{(S^+)}{(N^{Pas} * \gamma^{Reference})} \right) + \left( \frac{(S^-)}{(N'^{Pas} * \gamma^{Reference})} \right) \right]$$

12. Méthode d'obtention énergétique de la déformation d'une enveloppe pneumatique selon l'une quelconque des revendications précédentes dans laquelle l'acquisition du premier signal est effectuée à une fréquence d'échantillonnage constante et la discrétisation spatiale d'échantillonnage du premier signal est de moins de 6 degrés, préférentiellement moins de 3 degrés, très préférentiellement moins de 1 degrés

13. Méthode d'obtention de la déformation d'une enveloppe pneumatique selon la revendication 12 prise en combinaison avec la revendication 11 dans laquelle les densités d'énergie négative S$^-$ et positive S$^+$ sont définies selon les formules suivantes :

- Si le premier incrément (I$_{min}$) est un incrément correspondant à l'abscisse u du premier signal où le premier signal franchit la valeur plancher E en descente, alors:

[Math 4a]

$$S^+ = \left| \sum_{Sig^{TdR}>A}(Sig^{TdR} - \gamma^{Reference}) \right| * \frac{N'^{Pas}}{N^V}$$

; et

[Math 4b]

$$S^- = \left| \sum_{Sig^{TdR}\leq A}(Sig^{TdR} - \gamma^{Reference}) \right| * \frac{N^{Pas}}{N^V} ;$$

- Sinon :

[Math 4c]

$$S^+ = \left| \sum_{Sig^{TdR}>A}(Sig^{TdR} - \gamma^{Reference}) \right| * \frac{N^{Pas}}{N^V} ;$$

; et

[Math 4d]

$$S^- = \left| \sum_{Sig^{TdR}\leq A}(Sig^{TdR} - \gamma^{Reference}) \right| * \frac{N'^{Pas}}{N^V} ;$$

Où N$^V$ est le nombre total de points discrétisés sur le signal tour de roue Sig$^{TdR}$.

14. Méthode d'obtention énergétique de la déformation d'une enveloppe pneumatique selon la revendication 12 prise en combinaison avec la revendication 9 dans laquelle la détermination de l'accélération de référence $\gamma^{reference}$ est obtenue par la formule suivante :

[Math 5]

$$\gamma^{reference} = \frac{\left(\sum_{Sig^{TdR}} Sig^{TdR}\right)}{N^V}$$

Où $N^V$ est le nombre total de points discrétisés sur le signal tour de roue $Sig^{TdR}$.

15. Méthode d'obtention énergétique de la déformation d'une enveloppe pneumatique selon la des revendications 13 prise en combinaison avec la revendication 14, la déformation de l'enveloppe pneumatique soumise à une charge est déterminée par la formule suivante :

[Math 6]

$$Def_\% = \frac{\left[\sum_{Signal^{TdR}>A \, ou \, Signal^{TdR} \leq A} \left(Sig^{TdR} - \gamma^{Reference}\right)\right]}{\left(\sum_{Sig^{TdR}} Sig^{TdR}\right)}$$

**Patentansprüche**

1. Verfahren zur Ermittlung der Verformung eines einer Belastung ausgesetzten Reifenmantels in einem aufgepumpten und belasteten Zustand, der sich mit einer Drehzahl W dreht, wobei der Reifenmantel einen Scheitel, zwei Seitenwände und zwei Wülste, die um eine natürliche Drehachse umlaufen, und eine Mittelebene aufweist, wobei der Schnittpunkt der Mittelebene und der natürlichen Drehachse einen Radmittelpunkt definiert, die folgenden Schritte umfassend:

- Befestigen wenigstens eines Sensors am Reifenmantel am Scheitel mit einer radialen Position R in Bezug auf die natürliche Drehachse, der geeignet ist, wenigstens ein Ausgangssignal zu erzeugen, das proportional zu der Beschleunigung ist, welche der Sensor im Reifenmantel erfährt;
- Durchführen der Erfassung wenigstens eines ersten Signals mit der Abszisse u, das wenigstens die Amplitude der Beschleunigung in der zum Scheitel senkrechten Richtung bei einer Fahrt mit der Drehzahl W umfasst;
- Bestimmen einer Referenzbeschleunigung $\gamma^{reference}$, die von der Drehzahl W und der Position des wenigstens einen Sensors abhängig ist;
- Identifizieren einer ersten Reihe von Inkrementen I, die der Abszisse u des wenigstens einen ersten Signals, wo das erste Signal einen Schwellenwert B überschreitet, entspricht;
- Begrenzen des ersten Signals zwischen einem ersten Inkrement $I_{min}$ und einem zweiten Inkrement $I_{max}$, um ein Radumdrehungssignal $Sig^{TdR}$ zu konstruieren;
- Definieren wenigstens einer ersten Energiedichte S, welche vom Radumdrehungssignal und von der Referenzbeschleunigung $\gamma^{reference}$ abhängig ist, mit $S^+$ bezeichnet, wenn das Radumdrehungssignal größer als ein Schwellenwert A ist, oder mit $S^-$ bezeichnet, wenn das Radumdrehungssignal kleiner oder gleich diesem Schwellenwert A ist;
- Identifizieren der Verformung des Reifenmantels $Def_\%$, die durch die Belastung erzeugt wird, als Funktion der Referenzbeschleunigung $\gamma^{reference}$ und der ersten Energiedichte S.

2. Verfahren zur Ermittlung der Verformung eines Reifenmantels nach Anspruch 1, wobei die Erfassung des ersten Signals für eine Drehzahl W durchgeführt wird, die größer oder gleich einer Schwellenwert-Drehzahl $W_{seuil}$ ist, die durch die folgende Formel definiert ist:

[Math 1]

$$W_{seuil} = \frac{12}{\sqrt{Dev}},$$

wobei Dev die Abwicklung des Reifenmantels ist.

3. Energetisches Verfahren zur Ermittlung der Verformung eines Reifenmantels nach einem der Ansprüche 1 bis 2, wobei die erste Reihe von Inkrementen I durch die Kombination der folgenden Schritte identifiziert wird:

- Definieren eines Schwellenwertes B, welcher von dem wenigstens einen Maximum wenigstens eines Teils des ersten Signals abhängig ist;
- Bestimmen eines zweiten Signals mit der Abszisse u als Funktion des wenigstens einen Teils des ersten Signals und des Schwellenwertes B;
- Identifizieren der ersten Reihe von Inkrementen I, die der Abszisse u des wenigstens einen Teils des ersten Signals und des zweiten Signals, wo das zweite Signal einen Schwellenwert E überschreitet, entspricht.

4. Energetisches Verfahren zur Ermittlung der Verformung eines Reifenmantels nach dem vorhergehenden Anspruch, wobei der Schwellenwert B eine Wert ist, der zwischen 0,1 und 0,5 des wenigstens einen Maximums wenigstens eines Teils des ersten Signals liegt.

5. Energetisches Verfahren zur Ermittlung der Verformung eines Reifenmantels nach einem der Ansprüche 3 bis 4, wobei, wenn das zweite Signal durch die Differenz zwischen dem ersten Signal und dem Schwellenwert B erhalten wird, der Schwellenwert E der Wert null ist, oder, wenn das zweite Signal durch das Verhältnis zwischen dem ersten Signal und dem Schwellenwert B erhalten wird, der Schwellenwert E der Wert eins ist.

6. Energetisches Verfahren zur Ermittlung der Verformung eines Reifenmantels nach einem der Ansprüche 1 bis 5, wobei die Identifizierung der Inkremente die folgenden Schritte umfasst:

- Erzeugen einer zweiten Reihe von Inkrementen J mit der Abszisse u in der Mitte zwischen den Abszissen u der aufeinanderfolgenden Inkremente I mit identischen Paritäten,
- Konstruieren des Radumdrehungssignals $Sig^{TdR}$ zwischen einem ersten Inkrement $J_{min}$ und einem zweiten Inkrement $J_{max}$.

7. Energetisches Verfahren zur Ermittlung der Verformung eines Reifenmantels nach einem der vorhergehenden Ansprüche, wobei der Schwellenwert A von der Referenzbeschleunigung $\gamma^{reference}$ abhängig ist.

8. Energetisches Verfahren zur Ermittlung der Verformung eines Reifenmantels nach einem der Ansprüche 1 bis 7, wobei die Referenzbeschleunigung $\gamma^{reference}$, die von der radialen Position R des wenigstens einen Sensors abhängig ist, durch die folgende Formel definiert ist:

[Math 2]

$$\gamma^{reference} = R * W^2.$$

9. Energetisches Verfahren zur Ermittlung der Verformung eines Reifenmantels nach einem der Ansprüche 1 bis 7, wobei die Bestimmung der Referenzbeschleunigung $\gamma^{reference}$ als der Mittelwert wenigstens eines Teils des ersten Signals definiert ist, der zwischen zwei Inkrementen mit identischer Parität liegt, die derselben Inkrementreihe angehören.

10. Verfahren zur Ermittlung der Verformung eines Reifenmantels nach einem der vorhergehenden Ansprüche, wobei, nachdem das Radumdrehungssignal $Sig^{TdR}$ in Bezug auf eine Winkelposition des Reifenmantels phasensynchronisiert wurde, eine Korrektur corr an dem Radumdrehungssignal $Sig^{TdR}$ vorgenommen wird, um die Wirkung der Erdschwerkraft zu berücksichtigen.

11. Energetisches Verfahren zur Ermittlung der Verformung eines Reifenmantels nach einem der Ansprüche 1 bis 10, wobei das Verfahren die folgenden Schritte umfasst:

- Bestimmen einer ersten Durchgangszahl $N^{Pas}$ des Radumdrehungssignals $Sig^{TdR}$ als die kleinste ganze Zahl, die größer oder gleich der Hälfte der Differenz zwischen dem zweiten Inkrement (Jmax, Imax) und dem ersten Inkrement (Imin, Jmin) des Radumdrehungssignals $Sig^{TdR}$ ist;
- Bestimmen einer zweiten Durchgangszahl $N^{'Pas}$ des Radumdrehungssignal $Sig^{TdR}$ als den ganzzahligen Anteil der Hälfte der Differenz zwischen dem zweiten Inkrement (Jmax, Imax) und dem ersten Inkrement (Imin, Jmin) des Radumdrehungssignals $Sig^{TdR}$;
falls das erste Inkrement ($I_{min}$) ein Inkrement ist, das der Abszisse u des ersten Signals entspricht, wo das erste Signal den Schwellenwert B von oben nach unten überquert, umfasst das Verfahren den folgenden Schritt:

- Identifizieren der Verformung des einer Belastung ausgesetzten Reifenmantels Def$_\%$ durch die folgenden Formeln:

[Math 3a]

$$Def_\% = \frac{(S^-)}{(N^{Pas} * \gamma^{Reference})} = \frac{(S^+)}{(N^{'Pas} * \gamma^{Reference})} = \frac{1}{2} * \left[ \left( \frac{(S^+)}{(N^{'Pas} * \gamma^{Reference})} \right) + \left( \frac{(S^-)}{(N^{Pas} * \gamma^{Reference})} \right) \right]$$

Andernfalls umfasst das Verfahren den folgenden Schritt:

- Identifizieren der Verformung des einer Belastung ausgesetzten Reifenmantels Def$_\%$ durch die folgenden Formeln:

[Math 3b]

$$Def_\% = \frac{(S^+)}{(N^{Pas} * \gamma^{Reference})} = \frac{(S^-)}{(N^{'Pas} * \gamma^{Reference})} = \frac{1}{2} * \left[ \left( \frac{(S^+)}{(N^{Pas} * \gamma^{Reference})} \right) + \left( \frac{(S^-)}{(N^{'Pas} * \gamma^{Reference})} \right) \right]$$

12. Energetisches Verfahren zur Ermittlung der Verformung eines Reifenmantels nach einem der vorhergehenden Ansprüche, wobei die Erfassung des ersten Signals mit einer konstanten Abtastfrequenz durchgeführt wird und die räumliche Diskretisierung der Abtastung des ersten Signals weniger als 6 Grad beträgt, vorzugsweise weniger als 3 Grad, stärker bevorzugt weniger als 1 Grad.

13. Verfahren zur Ermittlung der Verformung eines Reifenmantels nach Anspruch 12 in Kombination mit Anspruch 11, wobei die negative S$^-$ und die positive Energiedichte S$^+$ gemäß den folgenden Formeln definiert sind:

- Falls das erste Inkrement ($I_{min}$) ein Inkrement ist, das der Abszisse u des ersten Signals entspricht, wo das erste Signal die Untergrenze E von oben nach unten überquert, dann ist:

[Math 4a]

$$S^+ = \left| \sum_{Sig^{TdR} > A} (Sig^{TdR} - \gamma^{Reference}) \right| * \frac{N^{'Pas}}{N^V};$$

und

[Math 4b]

$$S^- = \left| \sum_{Sig^{TdR} \leq A} (Sig^{TdR} - \gamma^{Reference}) \right| * \frac{N^{Pas}}{N^V};$$

- andernfalls:

[Math 4c]

$$S^+ = \left| \sum_{Sig^{TdR} > A} (Sig^{TdR} - \gamma^{Reference}) \right| * \frac{N^{Pas}}{N^V};$$

und

[Math 4d]

$$S^- = \left| \sum_{Sig^{TdR} \leq A}(Sig^{TdR} - \gamma^{Reference}) \right| * \left| \frac{N^{'Pas}}{N^V} \right|;$$

wobei $N^V$ die Gesamtzahl diskretisierter Punkte auf dem Radumdrehungssignal $Sig^{TdR}$ ist.

14. Energetisches Verfahren zur Ermittlung der Verformung eines Reifenmantels nach Anspruch 12 in Kombination mit Anspruch 9, wobei die Bestimmung der Referenzbeschleunigung $\gamma^{reference}$ durch die folgende Formel erfolgt:

[Math 5]

$$\gamma^{Reference} = \frac{\sum_{Sig^{TdR}} Sig^{TdR}}{N^V}$$

wobei $N^V$ die Gesamtzahl diskretisierter Punkte auf dem Radumdrehungssignal $Sig^{TdR}$ ist.

15. Energetisches Verfahren zur Ermittlung der Verformung eines Reifenmantels nach Anspruch 13 in Kombination mit Anspruch 14, wobei die Verformung des einer Belastung ausgesetzten Reifenmantels durch die folgende Formel bestimmt wird:

[Math 6]

$$Def_{\%} = \frac{\left| \sum_{Signal^{TdR} > A \text{ oder } Signal^{TdR} \leq A}(Sig^{TdR} - \gamma^{Reference}) \right|}{\left( \sum_{Sig^{TdR}} Sig^{TdR} \right)}.$$

**Claims**

1. Method for obtaining the deformation of a tyre casing subjected to a load, in an inflated and laden state rotating at a rotational speed W, said tyre casing having a crown, two sidewalls and two beads of revolution about a natural axis of rotation and a median plane, the intersection between the median plane and the natural axis of rotation defining a wheel centre, comprising the following steps:

   - Fixing at least one sensor on the tyre casing in line with the crown at a radial position R with respect to the natural axis of rotation and able to generate at least one output signal proportional to the acceleration experienced by said sensor in the tyre casing;
   - Acquiring at least a first abscissa signal u comprising at least the amplitude of the acceleration in the direction normal to the crown when running at the rotational speed W;
   - Determining a reference acceleration $\gamma^{reference}$ that is a function of the rotational speed W and of the position of at least one sensor;
   - Identifying a first series of increments I, corresponding to the abscissa value u of the at least one first signal at which the first signal crosses a threshold value B.
   - Delimiting the first signal between a first increment $I_{min}$ and a second increment $I_{max}$ so as to construct a wheel revolution signal $Sig^{TdR}$;
   - Defining at least a first energy density S which is a function of the wheel revolution signal, and of the reference acceleration $\gamma^{reference}$, and which is denoted $S^+$ when the wheel revolution signal is above a threshold value A, or is denoted $S^-$ when the wheel revolution signal is below or equal to said threshold value A;
   - Identifying the deformation of the tyre casing $Def_{\%}$, which deformation is generated by the load as a function of the reference acceleration $\gamma^{reference}$ and of the first energy density S.

2. Method for obtaining the deformation of the tyre casing according to Claim 1, wherein the acquisition of the first signal is performed for a rotational speed W greater than or equal to a threshold rotational speed $W_{seuil}$ defined by the following formula:

[Math 1]

$$W_{seuil} = \frac{12}{\sqrt{Dev}}$$

where Dev is the development of the tyre casing.

3. Method for energetically obtaining the deformation of a tyre casing according to either one of Claims 1 and 2, wherein the first series of increments I is identified using the combination of the following steps:

- Defining a threshold value B which is a function of the at least one maximum of at least part of the first signal;
- Determining a second abscissa signal u as being a function of the at least part of the first signal and of the threshold value B;
- Identifying the first series of increments I, corresponding to the abscissa value u of the at least part of the first signal and of the second signal where the second signal crosses a threshold value E.

4. Method for energetically obtaining the deformation of a tyre casing according to the preceding claim, wherein the threshold value B is a value comprised between 0.1 and 0.5 of the at least one maximum of at least part of the first signal.

5. Method for energetically obtaining the deformation of a tyre casing according to either one of Claims 3 and 4, wherein, with the second signal being obtained as the difference between the first signal and the threshold value B, the threshold value E is the value zero or, with the second signal being obtained as the ratio between the first signal and the threshold value B, the threshold value E is unity.

6. Method for energetically obtaining the deformation of a tyre casing according to one of Claims 1 to 5, wherein the identification of the increments comprises the following steps:

- Creating a second series of increments J corresponding to the median abscissa u between the abscissa values u of the increments I with consecutive and identical parities;
- Constructing the wheel revolution signal $Sig^{TdR}$ between a first increment $J_{min}$ and a second increment $J_{max}$.

7. Method for energetically obtaining the deformation of a tyre casing according to one of the preceding claims, wherein the threshold value A is a function of the reference acceleration $\gamma^{reference}$.

8. Method for energetically obtaining the deformation of a tyre casing according to one of Claims 1 to 7, wherein the reference acceleration $\gamma^{reference}$, which is a function of the radial position R of the at least one sensor, is defined by the following formula:

[Math 2]

$$\gamma^{reference} = R * W^2$$

9. Method for energetically obtaining the deformation of a tyre casing according to one of Claims 1 to 7, wherein the determination of the reference acceleration $\gamma^{reference}$ is defined as being the mean value of at least part of the first signal comprised between two increments of identical parity belonging to the same series of increments.

10. Method for obtaining the deformation of a tyre casing according to one of the preceding claims, wherein, having phased the wheel revolution signal $Sig^{TdR}$ with respect to an angular position of the tyre casing, a correction Corr is made to the wheel revolution signal $Sig^{TdR}$ to take account of the effect of the Earth's gravity.

11. Method for energetically obtaining the deformation of a tyre casing according to one of Claims 1 to 10, the method comprising the following steps:

- Determining a first number of passes $N^{Pas}$ of the wheel revolution signal $Sig^{TdR}$ as being the integer part in excess of half the difference between the second increment ($J_{max}$, $I_{max}$) and the first increment ($I_{min}$, $J_{min}$) of the wheel revolution signal $Sig^{TdR}$;

- Determining a second number of passes $N'^{Pas}$ of the wheel revolution signal $Sig^{TdR}$ as being the integer part of half the difference between the second increment ($J_{max}$, $I_{max}$) and the first increment ($I_{min}$, $J_{min}$) of the wheel revolution signal $Sig^{TdR}$;
If the first increment ($I_{min}$) is an increment corresponding to the abscissa u of the first signal where the first signal crosses the threshold value B in a downwards direction, then the method comprises the following step:

- Identifying the deformation of the tyre casing Def $_{\%}$, which casing is subjected to a load, using the following formulae:

[Math 3a]

$$Def_{\%} = \frac{(S^-)}{(N^{Pas} * \gamma^{Reference})} = \frac{(S^+)}{(N'^{Pas} * \gamma^{Reference})} = \frac{1}{2} * \left[ \left( \frac{(S^+)}{(N'^{Pas} * \gamma^{Reference})} \right) + \left( \frac{(S^-)}{(N^{Pas} * \gamma^{Reference})} \right) \right]$$

Otherwise, the method comprises the following step:

- Identifying the deformation of the tyre casing Def $_{\%}$, which casing is subjected to a load, using the following formulae:

[Math 3b]

$$Def_{\%} = \frac{(S^+)}{(N^{Pas} * \gamma^{Reference})} = \frac{(S^-)}{(N'^{Pas} * \gamma^{Reference})} = \frac{1}{2} * \left[ \left( \frac{(S^+)}{(N^{Pas} * \gamma^{Reference})} \right) + \left( \frac{(S^-)}{(N'^{Pas} * \gamma^{Reference})} \right) \right]$$

12. Method for energetically obtaining the deformation of a tyre casing according to any one of the preceding claims, wherein the acquisition of the first signal is performed at a constant sampling frequency and the spatial discretization of the sampling of the first signal is less than 6 degrees, preferably less than 3 degrees, and very preferably less than 1 degree.

13. Method for obtaining the deformation of a tyre casing according to Claim 12 considered in combination with Claim 11, wherein the energy densities that are negative S⁻ and positive S⁺ are defined according to the following formulae:

- If the first increment ($I_{min}$) is an increment corresponding to the abscissa u of the first signal where the first signal crosses the lower limit value E in a downwards direction, then:

[Math 4a]

$$S^+ = \left| \Sigma_{Sig^{TdR} > A} (Sig^{TdR} - \gamma^{Reference}) \right| * \frac{N'^{Pas}}{N^V} \;;$$

and

[Math 4b]

$$S^- = \left| \Sigma_{Sig^{TdR} \leq A} (Sig^{TdR} - \gamma^{Reference}) \right| * \frac{N^{Pas}}{N^V} \;:$$

- Otherwise:

[Math 4c]

$$S^+ = \left| \Sigma_{Sig^{TdR} > A} (Sig^{TdR} - \gamma^{Reference}) \right| * \frac{N^{Pas}}{N^V} \;;$$

and

[Math 4d]

$$S^- = \left| \sum\nolimits_{Sig^{TdR} \leq A} (Sig^{TdR} - \gamma^{Reference}) \right| * \frac{N'^{Pas}}{N^V}$$

Where $N^V$ is the total number of points discretized in the wheel revolution signal $Sig^{TdR}$.

14. Method for energetically obtaining the deformation of a tyre casing according to Claim 12 considered in combination with Claim 9, wherein the determination of the reference acceleration $\gamma^{reference}$ is obtained using the following formula:

[Math 5]

$$\gamma^{reference} = \frac{\left( \sum\nolimits_{Sig^{TdR}} Sig^{TdR} \right)}{N^V}$$

Where $N^V$ is the total number of points discretized in the wheel revolution signal $Sig^{TdR}$.

15. Method for energetically obtaining the deformation of a tyre casing according to Claim 13 considered in combination with Claim 14, wherein the deformation of the tyre casing subjected to a load is determined using the following formula:

[Math 6]

$$Def_\% = \frac{\left| \sum\nolimits_{Signal^{TdR} > A \, ou \, Signal^{TdR} \leq A} (Sig^{TdR} - \gamma^{Reference}) \right|}{\left( \sum\nolimits_{Sig^{TdR}} Sig^{TdR} \right)}$$

**FIG. 1**

**FIG. 2**

**FIG. 3**

**FIG. 4**

**FIG. 5**

**EP 3 898 287 B1**

## RÉFÉRENCES CITÉES DANS LA DESCRIPTION

**Documents brevets cités dans la description**

- WO 201732466 A1
- WO 2006034731 A1
- DE 102011000556 A1
- WO 2018029320 A1